# EUROPÄISCHE PATENTSCHRIFT

(11) **EP 0 345 730 B1**
(45) Veröffentlichungstag und Bekanntmachung des Hinweises auf die Patenterteilung: **31.08.1994**
(21) Anmeldenummer: 89110227.9
(22) Anmeldetag: 06.06.1989
(51) Int. Cl.: A41D 31/02, B29C 65/52, A41D 19/00

(54) **Wasserdichter, wasserdampfdurchlässiger Einsatz für Bekleidungsstücke**
Waterproof and water vapour-permeable insert for articles of clothing
Pièce imperméable et perméable à la vapeur d'eau pour articles d'habillement

(30) Priorität: 07.06.1988 DE 3819362
(43) Veröffentlichungstag der Anmeldung: 13.12.1989
(73) Patentinhaber: W.L. Gore & Associates GmbH, 85636 Putzbrunn (DE)
(72) Erfinder: Kleis, Rudolf, D-8152 Feldkirchen-Westerham (DE)
(74) Vertreter: Klunker . Schmitt-Nilson . Hirsch

(56) Entgegenhaltungen:
- WO-A-88/03068
- DD-A- 252 795
- DE-U- 8 714 816
- GB-A- 1 465 343
- US-A- 2 460 460
- US-A- 2 950 482
- US-A- 2 957 513
- US-A- 3 387 307
- US-A- 3 625 790
- US-A- 4 392 257

## Beschreibung

Die Erfindung betrifft einen wasserdichten Einsatz zur mindestens teilweisen Auskleidung von Bekleidungsstücken, insbesondere Handschuhen, Schuhen und Mützen, gemäß Oberbegriff des Anspruchs 1 und Verfahren zu deren Herstellung gemäß Oberbegriff des Anspruchs 8.

Es gibt wasserdichtes, jedoch wasserdampfdurchlässiges Membranmaterial, das im Lauf der letzten Jahre zunehmend für die Herstellung wasserdichter Bekleidungsgegenstände verwendet worden ist. Aufgrund seiner Dampfdurchlässigkeit ergeben sich angenehme Trageigenschaften. Solches Membranmaterial besteht z.B. aus gerecktem Polytetrafluorethylen (üblicherweise und auch hier abgekürzt mit PTFE).

In jüngerer Zeit hat man solches Membranmaterial auch für die Herstellung wasserdichter Bekleidungsstücke, wie Schuhe, Handschuhe und Mützen, verwendet. Dabei werden solche Bekleidungsstücke auf der Innenseite mindestens teilweise mit einer Funktionsschicht ausgekleidet, die aus solchem Membranmaterial besteht oder solches Membranmaterial aufweist.

Nähte sind problematisch, weil sie zur Wasserdurchlässigkeit des Membranmaterials führen. Aus diesem Grund werden solche wasserdichten Einsätze für Bekleidungsstücke herkömmlicherweise dadurch hergestellt, daß zwei Membranfolien von je einer Vorratsrolle abgerollt und übereinanderliegend in eine Schweißstation geführt werden, wo sie mittels einer

Schweißform entlang einer Konturbahn, die in etwa der Kontur des Bekleidungsstückes entspricht, miteinander verschweißt werden. Da ein derartiger Einsatz zunächst ein im wesentlichen zweidimensionales Gebilde ist, wird der Einsatz überdimensioniert, damit der zu bekleidende Körperteil, beispielsweise im Fall eines Handschuhs die Hand, genügend bequem in den Einsatz hineinpaßt.

Ein Beispiel eines Handschuhs mit einem Funktionsschicht-Einsatz aus zwei an ihrer Außenkontur verschweißten Folien ist in der DE 87 15 686 U1 gezeigt. Dabei ist eine Folie an ihrer Innenseite und die andere Folie an ihrer Außenseite im Bereich zwischen der verschweißten Außenkontur mit linien- oder punktförmigen Klebematerialstücken versehen, um den Funktionsschicht-Einsatz mit einem Innenfutter bzw. mit dem Außenmaterial des Handschuhs nichtflächig zu verkleben.

Aus DE-GM 1 949 730 ist es bekannt, zum Verkleben zweier blattförmiger Textilmaterialien thermoplastischen Kunststoff als Kleber zunächst auf einem solchen blattförmigen Träger aufzubringen, auf dem er nur schwach haftet, daraus Stücke in Form der zu verklebenden Flächen herauszuschneiden, und zwar ganzflächig oder teilflächig, die ausgeschnittenen Stücke zunächst auf eines der beiden zu verklebenden Textilmaterialien aufzukleben, dann den blattförmigen Träger abzuziehen und schließlich das nicht mit Kleber beschichtete Textilmaterial mit dem beschichteten Textilmaterial zu verkleben.

Auf diese Weise könnten bei dem Handschuh gemäß DE 87 15 686 U1 die linien- oder punktförmigen Klebematerialstücke auf die Funktionsschicht-Einsätze aufgebracht werden.

Es hat sich nun herausgestellt, daß die Schweißnähte solcher Einsätze mechanische Schwachstellen sind, die bei unsachgemäßer Handhabung bei der Herstellung von mit den Einsätzen versehenen Bekleidungsstücken reißen können.

Als Beispiel sei die Handschuh-Herstellung betrachtet. Dabei werden die Einsätze mit einer dem fertigen Finger-Handschuh entsprechenden Außenkontur üblicherweise von einer Person von Hand über ein grobes Holzmodell einer Hand gestülpt, woraufhin dann die Außenhaut des Handschuhs darübergezogen wird. Dabei kommt es häufig vor, daß das Überstülpen des Einsatzes über das Handmodell oder das nachfolgende Überstülpen der Außenhaut des Handschuhs zu heftig vorgenommen wird, so daß der Einsatz an der Schweißnaht reißt. Insbesondere wenn dies während des Überstülpens der Außenhaut des Handschuhs passiert, wird dies von der bearbeitenden Person nicht festgestellt. Aber auch wenn der Einsatz versehentlich so über das Holzmodell der Hand gestülpt wird, daß zwei Finger des Holzmodells in ein und denselben Fingerteil des Einsatzes gelangen, kann es passieren, daß der wasserdichte Einsatz dadurch überlastet wird und an seiner Schweißnaht reißt.

Der Erfindung liegt die Aufgabe zugrunde, hier Abhilfe zu schaffen und zu diesem Zweck einen wasserdichten Einsatz und Verfahren zu dessen Herstellung verfügbar zu machen, der widerstandsfähiger ist.

Ein wasserdichter Einsatz, der diese Aufgabe löst, ist im Anspruch 1 bzw. 4 angegeben und kann den Ansprüchen 2, 3, 5 bis 7 gemäß vorteilhaft weitergebildet werden.

Verfahren zur Herstellung eines derart verbesserten wasserdichten Einsatzes sind in den Ansprüchen 8 bis 23 angegeben.

Dadurch, daß erfindungsgemäß zwischen die beiden Membranfolien ein Haftvermittler in Form einer Folie oder in Form einer sich verfestigenden flüssigen oder pastösen Masse gebracht und an der Konturbahn mit den beiden Membranfolien verklebt wird, ergibt sich eine beträchtliche Erhöhung der Reißfestigkeit im Haftbereich der beiden Membranfolien. Im Fall der Verwendung einer flächigen Haftvermittlerfolie wird diese entweder nach dem Verklebungsvorgang innerhalb der Konturbahn herausgetrennt oder es wird eine perforierte Haftvermittlerfolie verwendet.
Dies deshalb, weil die Haftvermittlerfolie nicht wasserdampfdurchlässig ist. Ohne das Ausschneiden oder Perforieren der Haftvermittlerfolie würde der wasserdichte Einsatz auf einer Seite durch die Haftvermittlerfolie seiner Atmungsaktivität beraubt. Man kann aber auch die Haftfolie vorher so zuschneiden oder ausstanzen, daß sie nur einen Streifen mit dem Verlauf der Konturbahn bildet, so daß von Anfang an Material der Haftvermittlerfolie nur im Bereich der Konturbahn zwischen den beiden Membranfolien vorhanden ist.

Im Fall der flächig zwischen die beiden Membranfolien eingebrachten Haftvermittlerfolie bedarf es einer Aktivierungsstation mit selektiver Aktivierung entlang der Konturbahn, damit die Haftvermittlerfolie nicht vollflächig mit den beiden Membranfolien verklebt wird. Zu diesem Zweck verwendet man in der Aktivierungsstation entweder einen Stempel mit einer zu den Membranfolien abstehenden Aktivierungsrippe mit einer der Konturbahn entsprechenden Verlaufsform oder einen ebenen Stempel, in den eine Aktivierungszone mit einer der Konturbahn entsprechenden Verlaufsform eingearbeitet ist, beispielsweise eine elektrisch wirksame Heizbahn mit einer der Konturbahn entsprechenden Form.

Als Haftvermittler wird vorzugsweise ein Polyurethanmaterial verwendet. Bei dessen Formung in Folienform hat bereits eine Vernetzung stattgefunden. Zum Verklebevorgang ist daher eine Reaktivierung in der Aktivierungsstation erforderlich, mittels welcher der Haftvermittlerfolie im Bereich der Konturbahn Wärme-, Hochfrequenz- oder Ultraschall-Reaktivierungsenergie zugeführt wird, welche zu einem Anschmelzen der Haftvermittlerfolie führt.

Eine weitere Möglichkeit ist die, auf eine der beiden Membranfolien Haftvermittlermaterial in flüssiger oder pastöser Form raupenförmig in einem der Konturbahn entsprechenden Verlauf aufzutragen. Hierfür wird vorzugsweise eine Auftragsstation verwendet, die eine Unterlageplatte aufweist, welche die eine Membranfolie trägt. Mittels einer in X- und Y-Koordinatenrichtung beweglichen Auftragsdüse wird das flüssige oder pastöse Haftvermittlermaterial auf diese Membranfolie entsprechend dem Konturverlauf aufgetragen. Vorzugsweise wird hierzu ein computergesteuerter Plotter verwendet, der anstelle eines üblichen Schreibstiftes eine Auftragsdüse aufweist, die programmgesteuert die gewünschte Konturbahn abfährt und dabei flüssiges oder pastöses Haftvermittlermaterial auf die Membranfolie aufträgt. Dadurch, daß der Plotter unter der Steuerung eines programmierbaren Computers, beispielsweise eines Personal Computers oder eines Mikrocomputers, steht, kann durch Programmänderung oder andere Programmauswahl problemlos auf unterschiedliche Konturbahnen umgestellt werden, so daß ein und derselbe Plotter zum Auftragen unterschiedlicher Konturen verwendet werden kann. Auf diese Weise können in der selben Produktionsanlage wasserdichte Einsätze beispielsweise für unterschiedlich große Handschuhe oder auch für unterschiedliche Bekleidungsstücke, wie einerseits Handschuhe, andererseits Schuhe und weitererseits Mützen oder dergleichen, hergestellt werden. Dies ist ein besonderer Vorteil gegenüber der herkömmlichen Verschweißungstechnik mit Hilfe von Schweißformen, mit denen sich je nur eine einzige Konturbahn herstellen läßt, so daß für wasserdichte Einsätze für unterschiedliche Größen oder für unterschiedliche Bekleidungsstücke je eine unterschiedliche Schweißform erforderlich ist.

Beim konturbahnmäßigen Auftragen flüssiger oder pastöser Haftvermittlermasse mit Hilfe eines Plotters ist entweder eine Aktivierung überhaupt nicht erforderlich, weil flüssiger polyurethaner Klebstoff, der noch nicht vernetzt war, luftfeuchtigkeitshärtend ist, oder man kommt mit einer nicht-selektiven Aktivierung aus, da sich Haftvermittler nur exakt im Bereich der Konturbahn befindet, so daß eine vollflächige Wärme- oder Hochfrequenz-Aktivierung nicht zu einem vollflächigen Verkleben der beiden Membranfolien führen kann. Die Methode, flüssigen oder pastösen Haftvermittler mit einem Plotter aufzutragen, führt also zu dem großen Vorteil, daß ein und dieselbe Vorrichtung für die Herstellung beliebig geformter Einsätze verwendet werden kann. Die Notwendigkeit, für Einsätze jeder Form und jeder Größe je eine unterschiedliche Schweißform herstellen und vorrätig halten zu müssen, fällt also weg, was eine enorme Kostenverringerung bedeutet.

Der Auftragsdüse der Auftragsstation wird das flüssige oder pastöse Haftvermittlermaterial entweder von einem flüssigen oder pastösen Vorrat zugepumpt oder von einem Extruder zugeführt.

Besonders hohe Reißfestigkeit erreicht man, wenn man beide Membranfolien mindestens auf der zueinander weisenden Seite mit einer textilen Armierung, beispielsweise in Form eines Gewebes, eines Gewirkes oder eines Vlieses, armiert. Dies führt nicht nur zu einer enormen Erhöhung des Reißwiderstandes der Membranfolie, sondern auch zu einem besonders guten Haften der Membranfolien aneinander.

Als Haftvermittler ist insbesondere Polyurethan geeignet, das gemäß US-PS 4 532 316 hergestellt worden ist.

Weitere Aufgabenaspekte, Vorteile und Merkmale der Erfindung werden nun anhand von Ausführungsformen näher erläutert. In den Zeichnungen zeigen:
- Fig. 1: einen Handschuheinsatz in Draufsicht;
- Fig. 2: eine herkömmliche Verschweißungsvorrichtung in schematischer Darstellung;
- Fig. 3: eine erfindungsgemäß verwendete Mehrschichtenlage mit zwei Membranlaminaten und einer dazwischen befindlichen vollflächigen Haftvermittlerfolie;
- Fig. 4: eine erfindungsgemäß verwendete Mehrschichtenlage aus zwei Membranlaminaten und einer dazwischen befindlichen Haftvermittlerfolie in Konturbahnform;
- Fig. 5: in schematischer Form eine Anlage zur erfindungsgemäßen Herstellung von wasserdichten Einsätzen; und
- Fig. 6: eine schematische Darstellung der bei der Anlage in Fig. 5 verwendeten Auftragsstation.

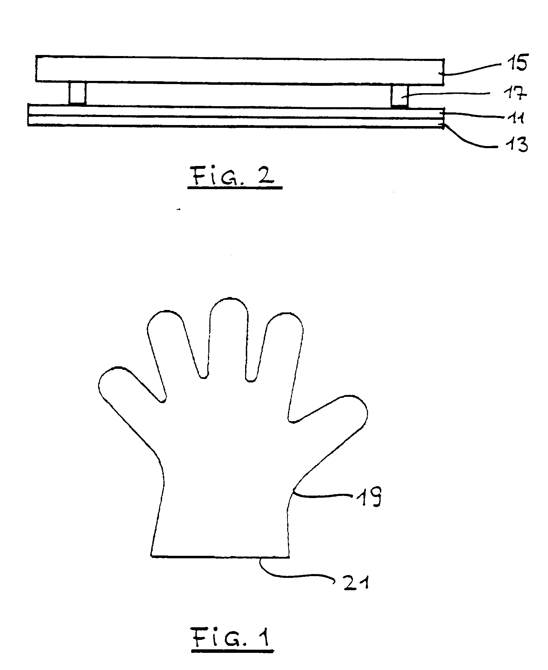

Anhand der Figuren 1 und 2 wird ein bisher praktiziertes Herstellungsverfahren erläutert. Zwei aufeinanderliegende Membranfolien 11 und 13 werden mit Hilfe einer Schweißform 15, die eine zu den Membranfolien 11 und 13 vorstehende Rippe 17 aufweist, in einer der Rippe 17 entsprechenden Konturbahn verschweißt. Zu diesem Zweck wird die Schweißform 15 geheizt und gegen die Membranfolien 11 und 13 gedrückt, die auf einer in Fig. 2 nicht dargestellten Unterlage abgestützt sind. Die miteinander verschweißten Membranfolien 11 und 13 werden dann entlang der Schweißbahn vom Rest des Folienmaterials abgetrennt, beispielsweise durch Stanzen.

Ein aus diesen Bearbeitungsvorgängen hervorgehender wasserdichter Einsatz für einen Handschuh ist in Fig. 1 dargestellt. Die Ronturbahn 19 ist durch den Schweißvorgang zustandegekommen und bildet nach dem Stanzvorgang die Begrenzung des geschlossenen Teils des Einsatzes, der lediglich am in Fig. 1 unteren Ende 21 offen ist.

Bei der Montage der mit solchen wasserdichten Einsätzen versehenen Handschuhe kommt es insbesondere an den Fingerspitzen der Einsätze zu einem Reißen des Einsatzes, wenn der Einsatz zu heftig auf ein Handmodell gestülpt wird.

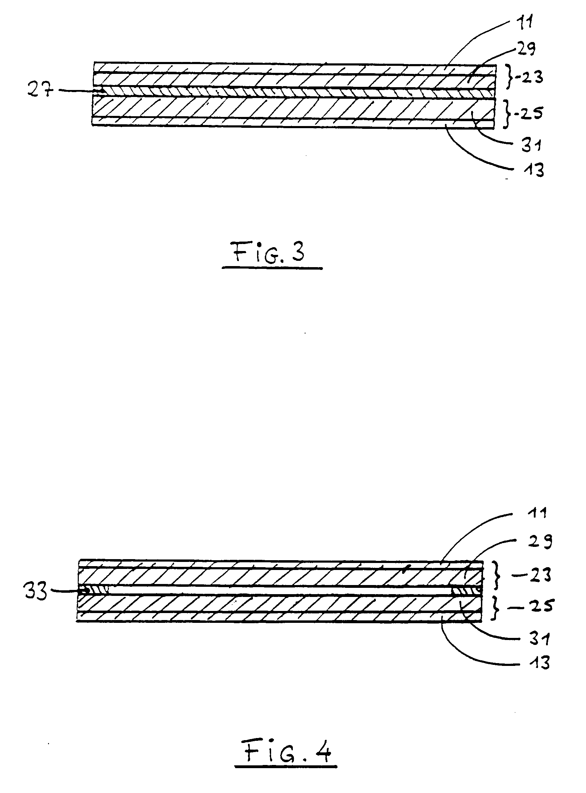

Eine erste Ausführungsform eines erfindungsgemäß verwendbaren Verbundes ist in Fig. 3 gezeigt. Dieser Verbund umfaßt ein oberes Laminat 23 und ein unteres Laminat 25, zwischen denen sich eine vollflächige Haftvermittlerfolie 27 befindet. Jedes der beiden Laminate 23 und 25 umfaßt eine Membranfolie 11 bzw. 13 und darauf eine zum je anderen Laminat weisende textile Armierung 29 bzw. 31. Diese besteht vorzugsweise aus einem Gewebe, Gewirke, Vlies oder dergleichen, das mit der zugehörigen Membranfolie zu einem Laminat verbunden ist.

Zur Herstellung eines wasserdichten Einsatzes aus dem Verbund gemäß Fig. 3 werden das obere Laminat 23 und das untere Laminat 25 je von einer Vorratsrolle zugeführt, wobei man zwischen die beiden Laminate 23 und 25 von einer weiteren Vorratsrolle die Haftvermittlerfolie 27 hineinlaufen läßt. Dieser Verbund gelangt dann in eine nicht dargestellte Aktivierungsstation, die einen Aktivierungsstempel enthält, der vorzugsweise in etwa eine Form wie die in Fig. 2 gezeigte Schweißform 15 besitzt. Der Aktivierungsstempel weist eine der Schweißrippe 17 entsprechende Aktivierungsrippe auf, deren Konturverlauf der Verklebekonturbahn des herzustellenden wasserdichten Einsatzes entspricht. Die Aktivierungsform führt der Haftvermittlerfolie 27 Reaktivierungsenergie entweder in Form von Wärmeenergie oder in Form von Hochfrequenzenergie zu. Durch diese Reaktivierung wird das Haftvermittlermaterial wieder verklebefähig.

Der innerhalb der Konturbahn befindliche Bereich der Haftvermittlerfolie 27 wird nach dem Verklebevorgang herausgetrennt, um beim Tragen des mit dem Einsatz ausgekleideten Bekleidungsstückes nicht die Atmungsaktivität der einen Membranfolie zu beeinträchtigen. Eine andere Möglichkeit ist die, die Haftvermittlerfolie 27 zu perforieren, so daß Atmungsaktivität durch diese perforierte Haftvermittlerfolie 27 hindurch gewährleistet ist.

Eine andere Ausführungsform eines erfindungsgemäß verwendbaren Verbundes ist in Fig. 4 gezeigt. Die beiden Laminate 23 und 25 stimmen mit den in Fig. 3 gezeigten Laminaten überein. Bei dieser Ausführungsform ist allerdings die Haftvermittlerfolie nicht vollflächig zwischen den Laminaten 23 und 25 angeordnet, sondern nur als selektive Haftvermittlerbahn 33, deren Form mit der Konturbahn übereinstimmt. Eine erste Möglichkeit ist die, zwischen den Laminaten 23 und 25 eine Haftvermittlerfolie anzuordnen, die in Streifenform entsprechend der Konturbahn geschnitten oder gestanzt ist. Eine andere Möglichkeit ist die, die Haftvermittlerbahn 33 aus flüssig oder pastös aufgetragenem Haftvermittler zu bilden. Eine weitere Möglichkeit besteht darin, Haftvermittlermaterial in Schnur- oder Bandform in der Konturbahnform aufzulegen.

Der in Fig. 4 gezeigte Verbund hat den Vorteil, daß keine selektive Aktivierung, wie im Fall des in Fig. 3 gezeigten Verbundes, erforderlich ist. Man kann den gesamten Verbund vollflächig aktivieren, wodurch es zur Aktivierung der Haftvermittlerbahn 33 kommt. Dies hat den großen Vorteil, daß für die Aktivierungsstation keine selektive Aktivierungsform erforderlich ist. Die Aktivierungsstation kann daher für verschiedene Einsätze mit unterschiedlicher Form und Größe verwendet werden.

Handelt es sich bei der Haftvermittlerbahn 33 um einen flüssig oder pastös aufgetragenen polyurethanen Haftvermittler, der noch nicht vernetzt war, kann man auf eine Aktivierungsstation gänzlich verzichten und den Haftvermittler durch Luftfeuchtigkeitshärtung festwerden lassen.

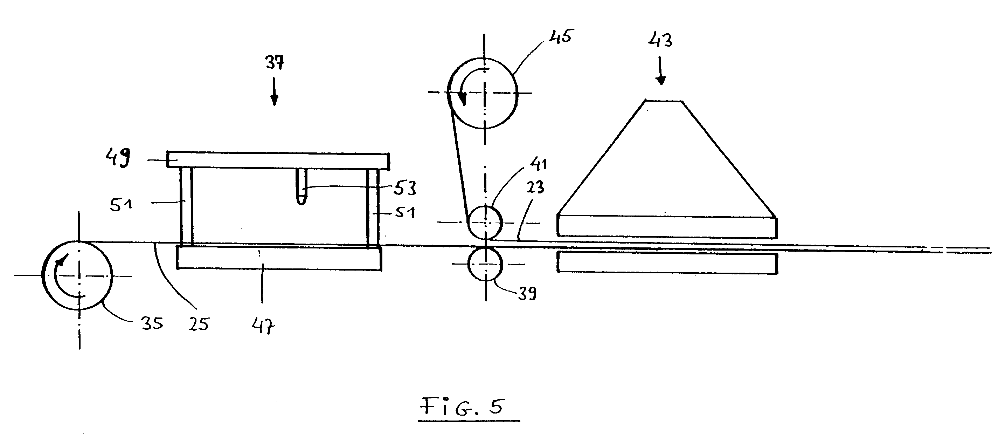

Für die Alternative des in Fig. 4 gezeigten Verbundes, bei welcher der Haftvermittler flüssig oder pastös in Form der Konturbahn aufgetragen wird, zeigt Fig. 5 in schematischer Darstellung eine Fertigungsanlage.

Von einer ersten Laminatvorratsrolle 35 wird das untere Laminat 25 zunächst durch eine Auftragsstation 37 und nach deren Verlassen durch eine Führungseinrichtung mit zwei Führungsrollen 39 und 41 geführt. Über die Führungsrolle 41 wird das obere Laminat 23 über das untere Laminat 25 gebracht. Danach gelangen die beiden Laminate 23 und 25 durch eine Aktivierungsstation 43.

Die Auftragsstation 37 weist eine Tragplatte 47 auf, über welche das untere Laminat 25 geführt wird. An einer Halteplatte 49, die mittels Stützen 51 auf der Tragplatte 47 abgestützt ist, ist eine Auftragsdüse 53 angeordnet. Durch die Auftragsdüse 53 kann flüssiger oder pastöser Haftvermittler zur Erzeugung der Haftvermittlerbahn 33 auf das untere Laminat 25 aufgetragen werden. Um eine gewünschte Konturbahn zu erzeugen, ist die Auftragsdüse 53 relativ zum Laminat 25 beweglich.

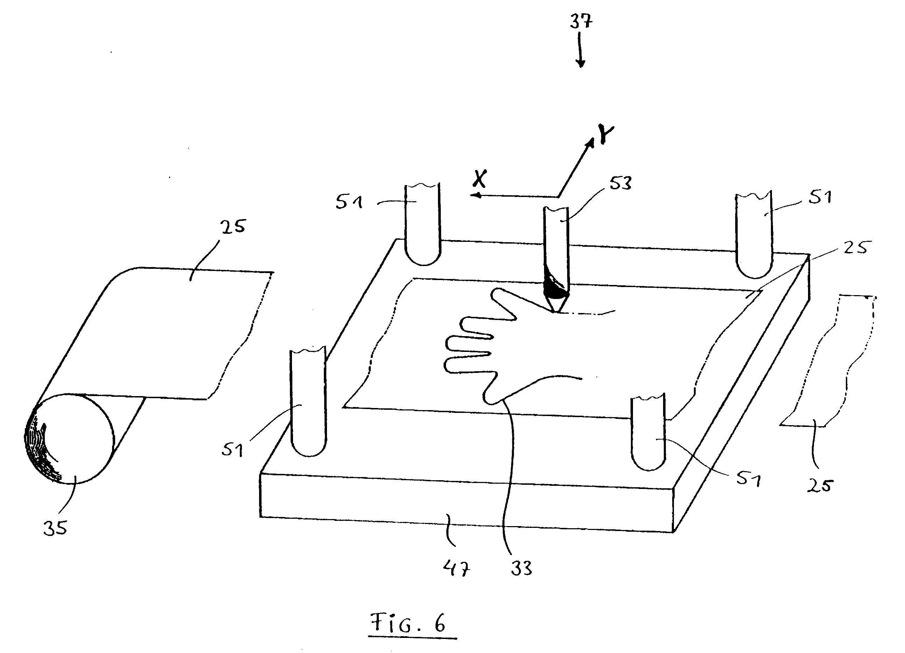

Fig. 6 zeigt in schematischer Weise eine etwas ausführlichere Darstellung der Auftragsstation 37. Zum Auftragen des flüssigen oder pastösen Haftvermittlers auf das Laminat 25 in der gewünschten Konturbahn ist die Auftragsdüse 53 vorzugsweise sowohl in der Längsrichtung X als auch in der Querrichtung Y der Bahn des Laminats 25 beweglich.

Eine Alternativmöglichkeit wäre eine feststehende Auftragsdüse 53 im Zusammenwirken mit einer sowohl in X- als auch in Y-Richtung beweglichen Tragplatte 47.

Bevorzugt wird die Ausführungsform, bei welcher die Auftragsdüse 53 in X- und in Y-Richtung beweglich ist. Bei einer besonders bevorzugten Ausführungsform dieser Art ist die Auftragsdüse 53 an einen Plotter montiert. Dabei kann es sich im wesentlichen um einen computergesteuerten Plotter handeln, der anstelle eines bei Plottern üblichen Schreibstiftes die Auftragsdüse 53 aufweist. Der Computer, bei dem es sich um einen Personal Computer oder um einen Mikrocomputer handeln kann, steuert die Auftragsvorrichtung. Durch Auswahl unterschiedlicher Programme können dann mit der Auftragsstation 37 ganz verschiedene Konturbahnen gesteuert werden.

Das mit der Haftvermittlerbahn 33 versehene Laminat 25 wird nach dessen Zusammenführung mit dem Laminat 23 gemeinsam mit diesem durch die Aktivierungsstation 43 geführt, mittels welcher eine Verpressung und/oder Aktivierung oder Reaktivierung des Haftvermittlermaterials durch Wärmeimpulse oder Hochfrequenzimpulse bewirkt wird. Dabei ist die Aktivierung bzw. Reaktivierung sowohl selektiv entsprechend der Haftvermittlerbahn 33 oder auch vollflächig möglich. Macht man die Aktivierungsstation 43 vollflächig wirksam, braucht man bis zum Ausstanzen des fertigen wasserdichten Einsatzes nirgends selektive Formen einzusetzen, die je nur für einen einzigen Einsatz bestimmter Größe und Form verwendbar sind.

Herkömmliche wasserdichte Einsätze sind gegenüber der eigentlich erforderlichen Größe stark überdimensioniert worden, um die Gefahr möglichst stark zu vermindern, daß bei der Benutzung des mit dem Einsatz ausgekleideten Bekleidungsstückes Dehnkräfte auftreten, die zu einem Reißen des Einsatzes führen können. Da bei einem erfindungsgemäß hergestellten wasserdichten Einsatz die Reißfestigkeit beträchtlich erhöht ist, können viel stärkere Dehnungskräfte verkraftet werden, weswegen nicht die starke Überdimensionierung wie bei herkömmlichen Einsätzen erforderlich ist. Für Bekleidungsstücke gleicher Größe können somit die wasserdichten Einsätze beträchtlich kleiner als bei herkömmlicher Herstellungsart sein. Dies führt bei den großen Stückzahlen, in welchen Bekleidungsstücke üblicherweise hergestellt werden, insgesamt zu einer enormen Einsparung an dem relativ teuren Membran- bzw. Laminat-Material.

Man kann mehrere Anlagen gemäß Fig. 5 parallel nebeneinander betreiben, deren Auftragsstationen 37 Plotter enthalten, die alle von dem selben Computer gesteuert werden. Auf diese Weise kann man eine nahezu beliebig hohe Anzahl wasserdichter Einsätze pro Zeiteinheit produzieren, die aufgrund der Steuerung durch den selben Computer mit sehr hoher Genauigkeit alle exakt die gleiche Einsatzform erzeugen.

Da bei der Anlage gemäß Fig. 5 die Auftragsstation 37 das langsamste Glied der Kette ist, kann man auch daran denken, mehrere Auftragsstationen 37 in Reihe entlang der Bewegungsbahn des Laminats 25 anzuordnen, so daß während jeder Haltezeit der intermittierend bewegten Laminatbahnen gleichzeitig die Haftvermittlerbahnen 33 einer Reihe von Einsätzen aufgetragen werden. Läßt man den Haftvermittler danach nicht durch Luftfeuchtigkeit aushärten, sondern in einer Aktivierungsstation 43, kann man genausoviele Aktivierungsstationen 43 vorsehen wie Auftragsstationen 37. Eine andere Möglichkeit ist die, daß man nach jeder Haltezeit für das Auftragen der Haftvermittlerbahnen 33 in kurzen intermittierenden Bewegungsschritten alle zuvor aufgetragenen Haftvermittlerbahnen 33 nacheinander durch eine einzige Aktivierungsstation 43 führt.

Wenn mit einer vollflächigen Aktivierung gearbeitet wird, kann diese auch während der Bewegung der Laminatbahnen durch die Aktivierungsstation 43 zwischen den Haltezeiten zum Auftragen der Haftvermittlerbahnen 33 vorgenommen werden.

## Patentansprüche

1. Wasserdichter, wasserdampfdurchlässiger Einsatz zur mindestens teilweisen Auskleidung von Bekleidungsstücken, insbesondere Handschuhen, Schuhen und Mützen,
wobei der Einsatz zwei aneinanderliegende Membranfolien (11, 13) aufweist, die eine wasserdichte, wasserdampfdurchlässige Funktionsschicht aufweisen und an einer Konturbahn (19), die im wesentlichen einer Bekleidungsstückkontur entspricht, mittels eines Haftvermittlers (27; 33) aneinander befestigt sind,
**dadurch gekennzeichnet,**
daß als Haftvermittler eine Haftvermittlerfolie (27) vorgesehen ist, die lose zwischen den beiden Membranfolien (11; 13) liegt und nur an der Konturbahn (19) mit beiden Membranfolien (11, 13) verbunden ist.

2. Wasserdichter Einsatz nach Anspruch 1, dadurch gekennzeichnet, daß der innerhalb der Konturbahn (19) befindliche Bereich der losen Haftvermittlerfolie (27) im wesentlichen der Konturbahn (19) folgend aus dem Einsatz herausgetrennt ist.

3. Wasserdichter Einsatz nach Anspruch 1, dadurch gekennzeichnet, daß mindestens der innerhalb der Konturbahn (19) befindliche Bereich der losen Haftvermittlerfolie (27) zur Erzielung von Luftdurchlässigkeit perforiert ist.

4. Wasserdichter Einsatz gemäß Oberbegriff des Anspruchs 1, dadurch gekennzeichnet, daß als Haftvermittler ein im wesentlichen auf die Konturbahn (19) begrenzter Haftvermittlerstreifen (33) vorgesehen ist.

5. Wasserdichter Einsatz nach einem der Ansprüche 1 bis 4, dadurch gekennzeichnet, daß der Haftvermittler durch ein Polyurethanmaterial gebildet ist.

6. Wasserdichter Einsatz nach mindestens einem der Ansprüche 1 bis 5, dadurch gekennzeichnet, daß jede der Membranfolien (11, 13) mindestens auf der zum Haftvermittler weisenden Seite mit einer textilen Armierungsschicht (29, 31) versehen ist.

7. Wasserdichter Einsatz nach Anspruch 6, dadurch gekennzeichnet, daß die Armieungsschicht ein Gewebe, Gewirke oder Vlies ist.

8. Verfahren zur Herstellung eines wasserdichten, wasserdampfdurchlässigen Einsatzes zur mindestens teilweisen Auskleidung von Bekleidungsstücken, insbesondere Handschuhen, Schuhen und Mützen, bei dem zwei Membranfolien (11, 13), die eine wasserdichte, wasserdampfdurchlässige Funktionsschicht aufweisen, unter Zwischenfügen eines Haftvermittlers längs einer insbesondere einer Bekleidungsstückkontur entsprechenden Konturbahn (19) aneinander festgeheftet werden,
**dadurch gekennzeichnet,**
daß zwischen die zwei Membranfolien (11, 13) im wesentlichen vollflächig eine separate Haftvermittlerfolie (27) eingebracht und selektiv entlang der Konturbahn (19) zum Verkleben der beiden Membranfolien (11, 13) aktiviert wird.

9. Verfahren nach Anspruch 8, dadurch gekennzeichnet, daß die Membranfolien (11, 13) und die dazwischen befindliche Haftvermittlerfolie (27) durch eine eine Aktivierungszone bildende Konturrippe eines Aktivierungsstempels, die einen der Konturbahn (19) entsprechenden Verlauf aufweist und der Aktivierungsenergie zugeführt wird, in der Konturbahn (19) aneinandergeklebt werden.

10. Verfahren nach Anspruch 9, dadurch gekennzeichnet, daß als Aktivierungsenergie Wärmeenergie zugeführt wird.

11. Verfahren nach Anspruch 9 oder 10, dadurch gekennzeichnet, daß als Aktivierungsenergie Hochfrequenzenergie zugeführt wird.

12. Verfahren nach Anspruch 9 oder 10, dadurch gekennzeichnet, daß als Aktivierungsenergie Ultraschallenergie zugeführt wird.

13. Verfahren nach einem der Ansprüche 8 bis 12, dadurch gekennzeichnet, daß nach dem Verkleben der Membranfolien (11, 13) mit der Haftvermittlerfolie (27) der innerhalb der Konturbahn (19) befindliche Bereich der Haftvermittlerfolie (27) herausgetrennt wird.

14. Verfahren nach einem der Ansprüche 8 bis 12, dadurch gekennzeichnet, daß mindestens der innerhalb der Konturbann (19) befindliche Bereich der Haftvermittlerfolie (27) perforiert wird.

15. Verfahren gemäß Oberbegriff des Anspruchs 8, dadurch gekennzeichnet, daß zwischen die zwei Membranfolien (11, 13) ein Haftvermittlerstreifen (33) mit einer der Konturbahn (19) entsprechenden Form eingebracht und durch Aktivieren mittels der Aktivierungseinrichtung (43) mit den beiden Membranfolien (11, 13) verklebt wird.

16. Verfahren gemäß Oberbegriff des Anspruchs 8, dadurch gekennzeichnet, daß in einer Auftragsstation (37) der Haftvermittler in flüssiger oder pastenartiger Form raupenförmig in einem der Konturbahn (19) entsprechenden Verlauf (33) auf die eine Membranfolie (13) aufgetragen wird, daß dann die beiden Membranfolien (11, 13) aufeinander gebracht werden
und daß schließlich der Haftvermittler zum Verkleben mit den beiden Membranfolien (11, 13) der Aktivierungseinrichtung (43) zugeführt wird.

17. Verfahren nach Anspruch 16, dadurch gekennzeichnet, daß der Haftvermittler nach dem Zusammenführen der Membranfolien (11, 13) der Luftfeuchtigkeitshärtung überlassen wird.

18. Verfahren nach Anspruch 16, dadurch gekennzeichnet, daß der Haftvermittler in einer Aktivierungsstation in einen klebefähigen Zustand aktiviert wird.

19. Verfahren nach Anspruch 18, dadurch gekennzeichnet, daß in der Aktivierungsstation (43) eine vollflächige oder der Konturbahn (19) entsprechende Wärme-, Hochfreqenz- oder Ultraschall-Beaufschlagung durchgeführt wird.

20. Verfahren nach einem der Ansprüche 16 bis 19, dadurch gekennzeichnet, daß die Auftragsstation (37) eine programmgesteuert in X- und Y-Koordinatenrichtung über die eine Membranfolie (13) bewegliche Auftragsdüse (53) für flüssigen oder pastösen Haftvermittler aufweist.

21. Verfahren nach Anspruch 20, dadurch gekennzeichnet, daß die Auftragsdüse (53) den "Schreibstift" eines computergesteuerten Plotters bildet.

22. Verfahren nach einem der Ansprüche 9 bis 20, dadurch gekennzeichnet, daß anstatt Membranfolien (11, 13) Laminate (23, 25) zugeführt werden, welche die Membranfolien (11, 13) und mindestens auf der je zur anderen Membranfolie weisenden Seite eine textile Armierungsschicht (29, 31) aufweisen.

23. Verfahren nach Anspruch 22, dadurch gekennzeichnet, daß als Armierungsschicht (29, 31) eine Gewebe-, Gewirke- oder Vliesschicht mit der Membranfolie (11, 13) laminiert wird.

## Claims

1. A watertight, water vapour permeable insert for at least partly lining articles of clothing, in particular gloves, shoes and caps,
the insert having two abutting membrane films (11, 13) which have a watertight, water vapour permeable functional layer and are attached to each other by means of a bonding agent (27; 33) on a contour path (19) corresponding substantially to the contour of an article of clothing, characterized in that the bonding agent provided is a bonding agent film (27) lying loosely between the two membrane films (11; 13) and connected to the two membrane films (11, 13) only on the contour path (19).

2. A watertight insert according to claim 1,
characterized in that the portion of the loose bonding agent film (27) located within the contour path (19) is removed from the insert substantially following the contour path (19).

3. A watertight insert according to claim 1,
characterized in that at least the portion of the loose bonding agent film (27) located within the contour path (19) is perforated to achieve air permeability.

4. A watertight insert according to the generic clause of claim 1, characterized in that the bonding agent provided is a bonding agent strip (33) limited substantially to the contour path (19).

5. A watertight insert according to any of claims 1 to 4, characterized in that the bonding agent is formed by a polyurethane material.

6. A watertight insert according to at least one of claims 1 to 5, characterized in that each of the membrane films (11, 13) is provided with a textile reinforcement layer (29, 31) at least on the side facing the bonding agent.

7. A watertight insert according to claim 6,
characterized in that the reinforcement layer is a woven, knitted or nonwoven fabric.

8. A method for producing a watertight, water vapour permeable insert for at least partly lining articles of clothing, in particular gloves, shoes and caps, in which two membrane films (11, 13) having a watertight, water vapour permeable functional layer are fastened to each other through the intermediary of a bonding agent along a contour path (19) corresponding in particular to the contour of an article of clothing,
characterized in that a separate bonding agent film (27) is placed between the two membrane films (11, 13) across substantially the entire surface and is activated selectively along the contour path (19) to bond the two membrane films (11, 13) together.

9. A method according to claim 8,
characterized in that the membrane films (11, 13) and the bonding agent film (27) located therebetween are bonded together in the contour path (19) by a contour rib of an activating die, said rib forming an activation zone and having a pattern corresponding to the contour path (19) and being supplied with activation energy.

10. A method according to claim 9,
characterized in that the activation energy supplied is thermal energy.

11. A method according to claim 9 or 10,
characterized in that the activation energy supplied is high-frequency energy.

12. A method according to claim 9 or 10,
characterized in that the activation energy supplied is ultrasonic energy.

13. A method according to any of claims 8 to 12,
characterized in that the portion of the bonding agent film (27) located within the contour path (19) is removed after the membrane films (11, 13) are bonded with the bonding agent film (27).

14. A method according to any of claims 8 to 12,
characterized in that at least the portion of the bonding agent film (27) located within the contour path (19) is perforated.

15. A method according to the generic clause of claim 8, characterized in that a bonding agent strip (33) having a shape corresponding to the contour path (19) is placed between the two membrane films (11, 13) and is bonded to the two membrane films (11, 13) by being activated by the activation means (43).

16. A method according to the generic clause of claim 8, characterized in that the bonding agent is applied, in an application unit (37), in a liquid or pasty form in bead-like manner to one membrane film (13) in a pattern (33) corresponding to the contour path (19), that the two membrane films (11, 13) are then brought onto each other, and that the bonding agent is finally fed to the activation means (43) for bonding with the two membrane films (11, 13).

17. A method according to claim 16,
characterized in that the bonding agent is left to harden by air humidity after the membrane films (11, 13) are brought together.

18. A method according to claim 16,
characterized in that the bonding agent is activated to a bondable state in an activation unit.

19. A method according to claim 18,
characterized in that exposure to thermal, high-frequency or ultrasonic energy is effected in the activation unit (43) across the entire surface or following the contour path (19).

20. A method according to any of claims 16 to 19,
characterized in that the application unit (37) has an application nozzle (53) for liquid or pasty bonding agent, which is movable over one membrane film (13) in the X and Y coordinate directions in program-controlled fashion.

21. A method according to claim 20,
characterized in that the application nozzle (53) forms the "pen" of a computer-controlled plotter.

22. A method according to any of claims 9 to 20,
characterized in that laminates (23, 25), instead of membrane films (11, 13), are supplied which comprise the membrane films (11, 13) and a textile reinforcement layer (29, 31) located at least on the side facing the respective other membrane film.

23. A method according to claim 22,
characterized in that the reinforcement layer (29, 31) is a woven, knitted or nonwoven fabric layer laminated to the membrane film (11, 13).

## Revendications

1. Insertion imperméable à l'eau, perméable à la vapeur d'eau, pour revêtir au moins partiellement des pièces de vêtement, notamment des gants, chaussures et coiffures, l'insertion possédant au moins deux pellicules membraneuses (11, 13) appliquées l'une contre l'autre, qui présentent une couche fonctionnelle imperméable à l'eau, perméable a' la vapeur d'eau, et sont fixées l'une à l'autre au moyen d'un agent adhésif (27 ; 33), le long d'une ligne de contour (19) qui correspond sensiblement au contour de la pièce de vêtement,
caractérisée
en ce qu'on prévoit comme agent adhésif une pellicule d'agent adhésif (27) qui est située sans fixation entre les deux pellicules membraneuses (11 ; 13) et n'est fixée aux deux pellicules membraneuses (11, 13) que le long de la ligne de contour (19).

2. Insertion imperméable à l'eau selon la revendication 1, caractérisée en ce que la région de la pellicule d'agent adhésif non fixée (27) située à l'intérieur de la ligne de contour (19) est retirée de l'insertion sensiblement en suivant la ligne de contour (19).

3. Insertion imperméable à l'eau selon la revendication 1, caractérisée en ce qu'au moins la région de la pellicule d'agent adhésif non fixée (27) qui se trouve à l'intérieur de la ligne de contour (19) est perforée pour assurer la perméabilité à l'air.

4. Insertion imperméable à l'eau selon le préambule de la revendication 1, caractérisée en ce qu'il est prévu comme agent adhésif un ruban d'adhésif (33) sensiblement limité à la ligne de contour (19).

5. Insertion imperméable à l'eau selon une des revendications 1 à 4, caractérisée en ce que l'agent adhésif est constitué par un polyuréthane.

6. Insertion imperméable à l'eau selon au moins une des revendications 1 à 5, caractérisée en ce chacune des pellicules membraneuses (11, 13) est munie d'une couche d'armature textile (29, 31) au moins sur la face dirigée vers l'agent adhésif.

7. Insertion imperméable à l'eau selon la revendication 6, caractérisée en ce que la couche d'armature est un tissu, tricot ou textile non tissé.

8. Procédé de fabrication d'une insertion imperméable à l'eau, perméable à la vapeur d'eau, pour le revêtement au moins partiel de pièces de vêtement, notamment de gants, chaussures et coiffures, dans lequel deux pellicules membraneuses (11, 13) qui présentent une couche fonctionnelle imperméable à l'eau, perméable à la vapeur d'eau, sont assemblées solidement l'une à l'autre avec interposition d'un agent adhésif le long d'une ligne de contour (19) qui correspond en particulier à un contour de pièce de vêtement,
caractérisé
en ce qu'une pellicule d'agent adhésif séparée (27) est intercalée entres les deux pellicules membraneuses (11, 13), sensiblement sur toute la surface, et est activée sélectivement le long de la ligne de contour (19) pour coller les deux pellicules membraneuses (11, 13).

9. Procédé selon la revendication 8, caractérisé en ce que les pellicules membraneuses (11, 13) et la pellicule d'agent adhésif (27) située entre elles sont collées l'une à l'autre le long de la ligne de contour (19) par une nervure de contour d'un poinçon d'activation, qui forme une zone d'activation, nervure qui présente un tracé correspondant à la ligne de contour (19) et à laquelle une énergie d'activation est transmise.

10. Procédé selon la revendication 9, caractérisé en ce qu'en tant qu'énergie d'activation, on apporte de l'énergie thermique.

11. Procédé selon la revendication 9 ou 10, caractérisé en ce qu'en tant qu'énergie d'activation, on apporte une énergie à haute fréquence.

12. Procédé selon la revendication 9 ou 10, caractérisé en ce qu'en tant qu'énergie d'activation, on apporte une énergie ultrasonore.

13. Procédé selon une des revendications 8 à 12, caractérisé en ce qu'après le collage des pellicules membraneuses (11, 13) avec la pellicule d'agent adhésif (27), on enlève la région de la pellicule d'agent adhésif (27) qui se trouve à l'intérieur de la ligne de contour (19).

14. Procédé selon une des revendications 8 à 12, caractérisé en ce qu'on perfore au moins la région de la pellicule d'agent adhésif qui se trouve à l'intérieur de la ligne de contour (19).

15. Procédé selon le préambule de la revendication 8, caractérisé en ce qu'entre les deux pellicules membraneuses (11, 13), on intercale une bandelette d'agent adhésif (33) possédant une forme correspondant à la ligne de contour (19), et on la colle aux deux pellicules membraneuses (11, 13) au moyen du dispositif d'activation (43).

16. Procédé selon le préambule de la revendication 8, caractérisé en ce que, dans un poste de dépôt (37), l'agent adhésif est déposé sur l'une (13) des pellicules membraneuses à l'état liquide ou pâteux, sous la forme d'une chenille, dans un tracé (33) correspondant à la ligne de contour (19), en ce qu'ensuite, les deux pellicules membraneuses (11, 13) sont appliquées l'une sur l'autre
et en ce que, finalement, l'agent adhésif est amené au dispositif d'activation (43) pour être collé aux deux pellicules membraneuses (11, 13).

17. Procédé selon la revendication 16, caractérisé en ce qu'après la réunion des pellicules membraneuses (11, 13), l'agent adhésif est abandonné au durcissement par l'humidité de l'air.

18. Procédé selon la revendication 16, caractérisé en ce que l'agent adhésif est activé dans un poste d'activation pour prendre un état apte au collage.

19. Procédé selon la revendication 18, caractérisé en ce que, dans le poste d'activation (43), on procède à une sollicitation thermique, à haute fréquence ou ultrasonore sur toute la surface ou dans une zone correspondant à la ligne de contour (19).

20. Procédé selon une des revendications 16 à 19, caractérisé en ce que le poste de dépôt (37) présente une buse de dépôt (53) pour agent adhésif liquide ou pâteux qui se déplace au-dessus de l'une des pellicules membraneuses (13) dans un mode commandé par programme dans les directions de coordonnées X et Y.

21. Procédé selon la revendication 20, caractérisé en ce que la buse de dépôt (53) forme la "plume" d'une table traçante commandée par ordinateur.

22. Procédé selon une des revendications 9 à 20, caractérisé en ce qu'en remplacement de pellicules membraneuses (11, 13), on achemine des stratifiés (23, 25) qui présentent les pellicules membraneuses (11, 13) et une couche d'armature textile (29, 31) au moins sur la face regardant l'autre pellicule membraneuse.

23. Procédé selon la revendication 22, caractérisé en ce qu'en tant que couche d'armature (29, 31), une couche de tissu, de tricot ou de textile non tissé est stratifiée sur la pellicule membraneuse (11, 13).
